# EUROPÄISCHE PATENTSCHRIFT

(11) **EP 2 995 502 B1**
(45) Veröffentlichungstag und Bekanntmachung des Hinweises auf die Patenterteilung: **18.10.2017**
(21) Anmeldenummer: 15179626.5
(22) Anmeldetag: 04.08.2015
(51) Int. Cl.: B60R 9/045, B60R 9/058

(54) **DACHTRÄGERANORDNUNG FÜR EIN KRAFTFAHRZEUG**
ROOF RACK ASSEMBLY FOR A MOTOR VEHICLE
AGENCEMENT DE GALERIE POUR UN VÉHICULE AUTOMOBILE

(30) Priorität: 11.09.2014 DE 102014218227
(43) Veröffentlichungstag der Anmeldung: 16.03.2016
(73) Patentinhaber: ATERA GmbH, 88299 Leutkirch im Allgäu (DE)
(72) Erfinder: Pickl, Adolf, 87487 Wiggensbach (DE)
(74) Vertreter: Patentanwälte Ruff, Wilhelm, Beier, Dauster & Partner mbB

(56) Entgegenhaltungen:
- WO-A1-2009/158360
- DE-A1-102011 053 603
- JP-A- H0 238 158
- US-A- 6 112 965

## Beschreibung

Die Erfindung betrifft eine Dachträgeranordnung für ein Kraftfahrzeug mit einem Trägerprofil, das in montiertem Zustand in Fahrzeugquerrichtung über ein Fahrzeugdach erstreckt ist, sowie mit zwei Stützfüßen, die das Trägerprofil in montiertem Zustand auf jeweils einem fahrzeugfesten Dachrelingprofil sichern, wobei jeder Stützfuß einen Stützkörper, auf dem das Trägerprofil abgestützt ist, sowie einen relativ zu dem Stützkörper beweglichen inneren Klemmbacken aufweist.

Eine derartige Dachträgeranordnung ist aus der US 2004/0211801 A1 bekannt. Die bekannte Dachträgeranordnung weist ein als Hohlprofil gestaltetes Trägerprofil auf, das an seinen gegenüberliegenden Stirnenden auf jeweils einem Stützfuß abgestützt ist, mittels derer das Trägerprofil auf entsprechenden Dachrelingprofilen eines Fahrzeugdachs fixierbar ist. Jeder Stützfuß weist einen mit dem Trägerprofil verbundenen Stützkörper auf, der einen einstückig angeformten, äußeren Klemmbacken umfasst. An dem Stützkörper ist zudem ein innerer Klemmbacken, der das entsprechende Dachrelingprofil im Bereich einer Innenseite umgreift, beweglich angeordnet. Eine Verlagerung des inneren Klemmbackens erfolgt über eine Schraubenanordnung. Die DE102011053603A zeigt eine Dachträgeranordnung nach dem Oberbegriff des Anspruchs 1. Aufgabe der Erfindung ist es, eine Dachträgeranordnung der eingangs genannten Art zu schaffen, die eine weiter verbesserte Handhabung und Sicherung bei einer Montage auf einem Fahrzeugdach ermöglicht.

Diese Aufgabe wird dadurch gelöst, dass der innere Klemmbacken parallel zu einer Längserstreckung des Trägerprofils linearbeweglich gelagert ist, und dass eine mechanische Stelleinheit vorgesehen ist, die mit dem inneren Klemmbacken in Wirkverbindung ist, um den Klemmbacken zwischen einer Freigabestellung und einer Klemmstellung zu verlagern. In der Freigabestellung des Klemmbackens ist der Klemmbacken zu dem entsprechenden Dachrelingprofil beabstandet, so dass der Stützfuß nach oben von dem Dachrelingprofil entfernt werden kann. In der Klemmstellung wird der Klemmbacken von einer Innenseite her gegen das Dachrelingprofil gedrückt. Der innere Klemmbacken ist in montiertem Zustand der Dachträgeranordnung auf dem Fahrzeugdach auf einer zur Dachmitte hin gewandten Innenseite des entsprechenden Dachrelingprofils angeordnet. Die Stelleinheit, die erfindungsgemäß auf den inneren Klemmbacken wirkt, ermöglicht eine einfache Handhabung bei einer Montage oder Demontage der Dachträgeranordnung. Dadurch, dass der innere Klemmbacken relativ zu dem Stützkörper des Stützfußes beweglich angeordnet ist, kann der Stützkörper selbst kompakt gestaltet sein. Erfindungsgemäß weist jeder Stützfuß eine äußere Klemmplatte mit einem Untergriff auf, die in Hochrichtung relativ zu dem Stützkörper verlagerbar ist, und die mechanische Stelleinheit ist zusätzlich mit der äußeren Klemmplatte in Wirkverbindung, um die Klemmplatte gemeinsam mit dem Klemmbacken zwischen der Freigabestellung und der Klemmstellung zu verlagern. Der Untergriff der Klemmplatte dient dazu, ein entsprechendes Dachrelingprofil eines Fahrzeugdachs außenseitig zu untergreifen. In der Klemmstellung untergreift die Klemmplatte das Dachrelingprofil außenseitig klemmend. Die äußere Klemmplatte ist in diesem montierten Zustand auf einer zur Fahrzeugaußenseite gewandten äußeren Flanke des jeweiligen Dachrelingprofils positioniert. Die Verlagerbarkeit der äußeren Klemmplatte in Hochrichtung bedeutet, dass die Klemmplatte eine Bewegungskomponente in Hochrichtung durchführt, die von anderen Bewegungskomponenten in Quer- oder Längsrichtung relativ zum Stützkörper überlagert sein kann. Erfindungsgemäß ist die Klemmplatte in Abstand oberhalb des Untergriffs mit einem Führungsabschnitt versehen, der auf einer gekrümmten Führungsfläche des Stützkörpers gleitbeweglich abgestützt ist. Die gekrümmte Führungsfläche des Stützkörpers ist auf einer Außenseite des Stützkörpers vorgesehen, die in montiertem Zustand in Fahrzeugquerrichtung zur Außenseite des Fahrzeugs hin gewandt ist.

In weiterer Ausgestaltung der Erfindung umfasst die Stelleinheit einen Spannhebel, der in dem linearbeweglichen Klemmbacken schwenkbeweglich gelagert ist, und der einen Kopfabschnitt umfasst, der formschlüssig in das Trägerprofil eingreift. Der Spannhebel ist demzufolge am linearbeweglichen Klemmbacken abgestützt und über seinen Kopfabschnitt in einem entsprechenden Hohlprofilbereich des Trägerprofils gehalten.

In weiterer Ausgestaltung der Erfindung weist der Kopfabschnitt Stützelemente auf, die in dem Trägerprofil längsverlagerbar geführt sind, und die den Kopfabschnitt in Hochrichtung in dem Trägerprofil abstützen. Diese Ausgestaltung ist vorteilhaft, damit der Spannhebel gemeinsam mit dem linearbeweglichen Klemmbacken relativ zum Trägerprofil verschoben werden kann.

In weiterer Ausgestaltung der Erfindung sind die Stützelemente an dem Kopfabschnitt um wenigstens eine Gelenkachse gelenkig gelagert, die parallel zu der Schwenkachse des Spannhebels ausgerichtet ist. Diese Ausgestaltung ist vorteilhaft, wenn die Schwenkbeweglichkeit des Spannhebels zusätzlich dazu führt, den Stützkörper von unten her gegen das Trägerprofil zu pressen. Denn dann führt der Spannhebel mittels seines Kopfabschnitts innerhalb des Trägerprofils leichte Schwenkbewegungen durch, die durch die gelenkige Lagerung der Gleitelemente ausgeglichen werden, die im Trägerprofil linearbeweglich gelagert sind.

In weiterer Ausgestaltung der Erfindung weist die Stelleinheit eine von einer Außenseite des Stützfußes her zugängliche Stellschraube auf, die mittels ihres Schraubenkopfes an der Klemmplatte abgestützt ist, und die in eine Gewindeaufnahme des Spannhebels schraubbeweglich eingreift. Dadurch wird mit einfachen Mitteln die Wirkverbindung zwischen der Stelleinheit, der Klemmplatte und dem Klemmbacken, d.h. dem Spannhebel, erzielt.

In weiterer Ausgestaltung der Erfindung ist die Gewindeaufnahme durch eine Gewindemutter gebildet, die in dem Spannhebel um eine Drehachse begrenzt drehbeweglich gelagert ist, die parallel zu der Schwenkachse des Spannhebels ausgerichtet ist. Dadurch werden relative Drehbewegungen zwischen der Stellschraube der Stelleinheit und dem Spannhebel während eines entsprechenden Montage- oder Demontagevorgangs ausgeglichen.

In weiterer Ausgestaltung der Erfindung ist wenigstens ein Stützelement durch ein in Hochrichtung elastisch nachgiebiges Spannelement gebildet, das sich in Hochrichtung vorgespannt auf einem Bodenabschnitt des Trägerprofils abstützt. Durch die Abstützung des Spannelementes auf dem Bodenabschnitt des Trägerprofils bewirkt das Spannelement eine Zugkraft in Hochrichtung auf den Kopfabschnitt des Spannhebels. Die elastische Nachgiebigkeit ermöglicht eine Klapperfreiheit des Stützfußes relativ zum Trägerprofil in unmontiertem Zustand des Trägerprofils. Zudem ist ein Toleranzausgleich zwischen Trägerprofil und Stützfuß bzw. zwischen Trägerprofil und Kopfabschnitt des Spannhebels gewährleistet. Als elastisch nachgiebiges Spannelement kann eine Elastomeranordnung oder eine Federanordnung vorgesehen sein.

In weiterer Ausgestaltung der Erfindung ist das Spannelement durch eine Blattfeder gebildet, die zwei in Längsrichtung des Trägerprofils zueinander beabstandete Stützabschnitte aufweist, mit denen die Blattfeder auf dem Bodenabschnitt des Trägerprofils abgestützt ist. Die Blattfeder weist demzufolge eine im Querschnitt W-artige Form auf. Durch die zueinander beabstandeten Stützabschnitte ist eine statisch bestimmte Abstützung des Kopfabschnittes in dem Trägerprofil durch die wenigstens eine Blattfeder gewährleistet. In vorteilhafter Weise liegt die Gelenkachse der Blattfeder, um die die Blattfeder relativ zum Kopfabschnitt schwenkbeweglich gelagert ist, in einer vertikalen Mittelebene zwischen den beiden Stützabschnitten.

In weiterer Ausgestaltung der Erfindung ist eine in Längsrichtung des Trägerprofils zu dem wenigstens einen Spannelement beabstandetes, um eine parallele Gelenkachse am Kopfabschnitt schwenkbeweglich angelenktes Stützelement vorgesehen, das in unbelastetem Zustand des Spannhebels zu dem Bodenabschnitt des Trägerprofils beabstandet ist. Das Stützelement wird somit während eines Verlagerungsvorganges des Klemmbackens gemeinsam mit dem Spannhebel durch das wenigstens eine Spannelement zunächst in einer knapp über dem Bodenabschnitt des Trägerprofils schwebenden Stellung gehalten, bevor der Spannhebel beim Auftreffen und Klemmen des Klemmbackens relativ zum Dachrelingprofil zu kippen beginnt. Das Spannelement hält den Spannhebel somit in etwa vertikaler Ausrichtung, wobei das Stützelement erst ab einem vorgegebenen, höheren Drehmoment, das durch die Stelleinheit auf den Spannhebel wirkt, in Eingriff mit dem Trägerprofil gelangt. Als Stützelement ist vorzugsweise ein Klemmstein vorgesehen, der quaderartig ausgeführt ist und vorzugsweise Kunststoffgleitflächen aufweist, mit denen das Stützelement an dem Bodenabschnitt oder an einer anderen Wandungsfläche des Trägerprofils zur Anlage gelangt.

In weiterer Ausgestaltung der Erfindung ist eine Vorspannkraft, die durch das wenigstens eine Spannelement auf den Bodenabschnitt des Trägerprofils wirkt, derart dimensioniert, dass der Kopfabschnitt bei einer Verlagerungsbewegung des Klemmbackens durch das Spannelement derart parallel gehalten wird, dass das Stützelement zu dem Bodenabschnitt beabstandet bleibt, bis der Klemmbacken an dem Dachrelingprofil zur Anlage kommt und der Spannhebel um einen vorgegebenen Winkel verschwenkt ist. Durch das wenigstens eine Spannelement wird auf den Bodenabschnitt des Trägerprofils in Hochrichtung des Spannhebels in jeder Montagestellung eine Stützkraft übertragen, die den Kopfabschnitt in Hochrichtung in den Längsschlitz des Trägerprofils hineinzieht. Diese permanent vorhandene Vorspannkraft wird bei einer Verschwenkung des Spannhebels überlagert durch die zusätzlich auftretende Klemmkraft in Hochrichtung nach unten, mit der das vorzugsweise als Klemmstein ausgeführte Spannelement auf den Bodenabschnitt des Trägerprofils gepresst wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Ausschnitt einer Ausführungsform einer erfindungsgemäßen Dachträgeranordnung in montiertem Zustand auf einem Dachrelingprofil eines Fahrzeugdachs,
- Fig. 2: die Ausführungsform nach Fig. 1 in einer Schnittdarstellung längs einer vertikalen Fahrzeugquerebene,
- Fig. 3: die Dachträgeranordnung nach Fig. 2 in einer Zwischenmontagestellung,
- Fig. 4: die Dachträgeranordnung nach den Fig. 2 und 3 in einer an dem Dachrelingprofil geklemmten Montageposition,
- Fig. 5: die Dachträgeranordnung nach Fig. 4 mit verschlossenem Blendendeckel und
- Fig. 6: in vergrößerter Darstellung den Schnitt gemäß Fig. 2.

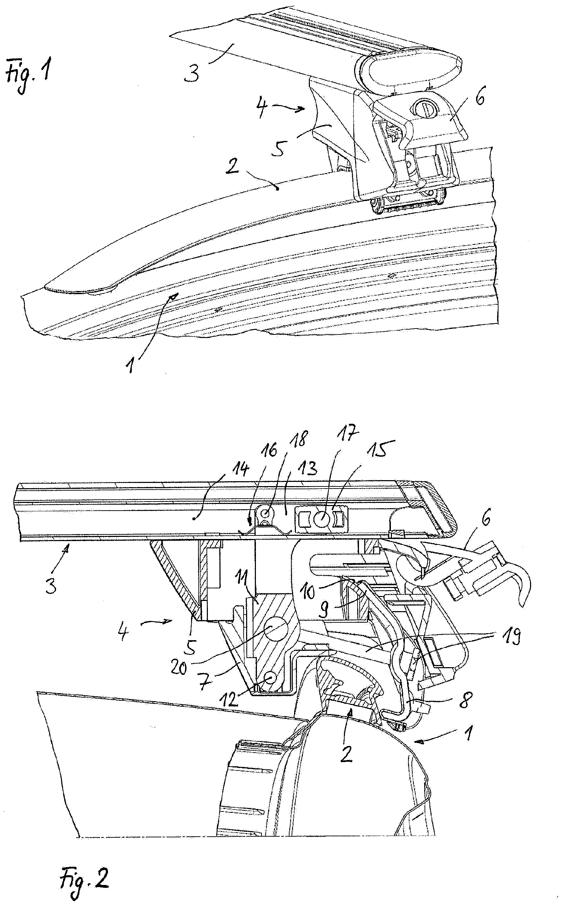

Ein Kraftfahrzeug in Form eines Personenkraftwagens weist gemäß Fig. 1 ein Fahrzeugdach 1 auf, das an seinen gegenüberliegenden Längsseiten mit jeweils einem Dachrelingprofil 2 versehen ist. Die beiden Dachrelingprofile 2 erstrecken sich im Wesentlichen in Fahrzeuglängsrichtung über einen Großteil der Länge des Fahrzeugdachs 1. Eine Dachträgeranordnung, die zur Befestigung auf den beiden Dachrelingprofilen 2 vorgesehen ist, weist ein längserstrecktes Trägerprofil 3 auf, das sich in montiertem Zustand in Fahrzeugquerrichtung über die Breite des Fahrzeugdachs 1 erstreckt. Das Trägerprofil 3 wird an seinen gegenüberliegenden Stirnendbereichen durch jeweils einen Stützfuß 4 gestützt, der an dem jeweiligen Dachrelingprofil 2 montierbar ist. Anhand der Fig. 1 bis 5 ist lediglich der - in normaler Fahrtrichtung des Personenkraftwagens gesehen - linke Stützfuß 4 dargestellt. Der gegenüberliegende Stützfuß 4 ist spiegelsymmetrisch, im Übrigen jedoch identisch gestaltet. Die Ausführungen zu der Dachträgeranordnung mit der Darstellung des linken Stützfußes 4 gemäß den Fig. 1 bis 6 gelten daher in gleicher Weise für den nicht dargestellten rechten Stützfuß.

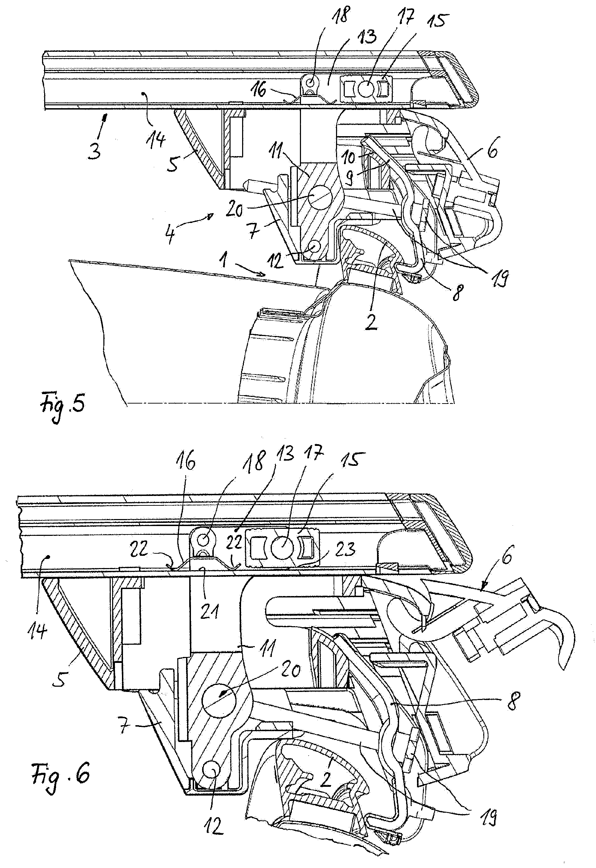

Der Stützfuß 4 weist einen formstabilen Stützkörper 5 auf, der das Trägerprofil 3 im Bereich einer Unterseite des Trägerprofils 3 abstützt. Im Bereich einer Unterseite des Stützkörpers 5 ist ein Klemmbacken 7 parallel zu einer Längserstreckung des Trägerprofils 3 linearbeweglich verschiebbar gelagert. Der Klemmbacken 7 ist in montiertem Zustand des Trägerprofils 3 innenseitig des Dachrelingprofils 2 positioniert. In dem Klemmbacken 7 ist ein Spannhebel 11 schwenkbeweglich gelagert, der an seinem Fußbereich um eine Schwenkachse 12 im Bereich eines Bodens des Klemmbackens 7 mittels einer entsprechenden Schwenklagerung gehalten ist. Die Schwenkachse 12 erstreckt sich quer zu einer Längserstreckung des Trägerprofils 3 und damit in dem anhand der Fig. 1 bis 6 dargestellten montierten Zustand des Stützfußes 4 im Wesentlichen in Fahrzeuglängsrichtung. Der Spannhebel 11 weist einen Kopfabschnitt 13 auf, der durch einen nicht näher bezeichneten Längsschlitz in dem Trägerprofil 3 in einen Hohlprofilabschnitt 14, d.h. in einen Hohlraum, des Trägerprofils 3 hineinragt. An dem Kopfabschnitt 13 sind Stützelemente 15, 16 angeordnet. Die Stützelemente 15, 16 stützen den Kopfabschnitt 13 in dem Hohlprofilabschnitt 14 des Trägerprofils 3 beidseitig des Längsschlitzes im Bereich der Unterseite des Trägerprofils 3 ab. Die Stützelemente 15, 16 sind an dem Kopfabschnitt 13 um Drehachsen schwenkbeweglich gelagert, die parallel zu der Schwenkachse 12 ausgerichtet sind. Zur drehbeweglichen Lagerung der blockartigen Stützelemente 15, die den Kopfabschnitt 13 beidseitig des Längsschlitzes des Trägerprofils 3 flankieren, ist ein Lagerbolzen 17 vorgesehen. Die Stützelemente 15 werden auch als Klemmsteine bezeichnet. Das Stützelement 16 ist ein Spannelement und wird durch eine gebogene Blattfeder gebildet, die mittels eines Trägerkörpers und eines Lagerbolzens 18 an dem Kopfabschnitt 13 gelagert ist. Auch die Stützelemente 16 sind paarweise in identischer Weise beidseitig des Kopfabschnitts 13 angeordnet. Beide Stützelemente 16 sind identisch zueinander gestaltet und weisen jeweils eine gebogene Blattfeder auf, die sich auf dem Boden des Hohlprofilabschnitts 14 seitlich neben dem Längsschlitz des Trägerprofils 3 abstützen. Ausgestaltung und Funktion der als Spannelemente gestalteten Stützelemente 16 werden anhand der Fig. 6 nachfolgend näher beschrieben.

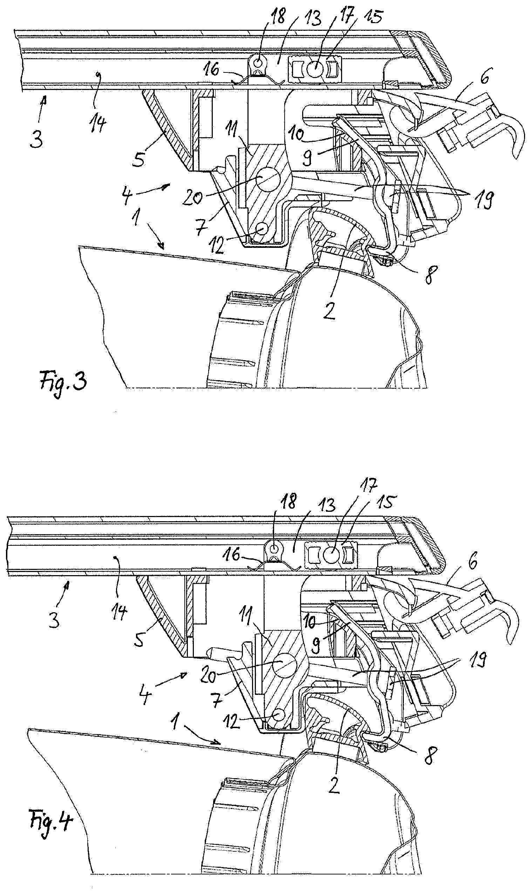

Jeder Stützfuß 4 umfasst zudem eine Klemmplatte 8, die in montiertem Zustand des Trägerprofils 3 außenseitig des Dachrelingprofils 2 positioniert ist. Die Klemmplatte 8 weist einen Untergriff auf, der als nach innen gekrümmter Steg ausgeführt ist, um eine Außenschulter des Dachrelingprofils 2 untergreifen zu können (siehe Fig. 3 bis 5). Die Klemmplatte 8 weist an ihrer dem Untergriff gegenüberliegenden Oberseite einen Führungsabschnitt 9 auf, der außenseitig auf einer gewölbten Führungsfläche 10 des Stützkörpers 5 abgestützt ist. Die Klemmplatte 8 ist relativ zu dem Stützkörper 5 im Wesentlichen in Hochrichtung verschiebbar gelagert, wobei der Führungsabschnitt 9 an der gewölbten Führungsfläche 10 des Stützkörpers 5 entlanggleitet. Die Klemmplatte 8 ist in einer Freigabestellung gemäß Fig. 2 bei auf das Dachrelingprofil 2 aufgesetztem Stützfuß 4 in Abstand unterhalb der Außenschulter des Dachrelingprofils 2 positioniert. In geklemmtem Zustand des Stützfußes 4 liegt der Untergriff der Klemmplatte 8 von unten her an der Außenschulter des Dachrelingprofils 2 an (siehe Fig. 3 bis 5). Der innere Klemmbacken 7 ist in seiner Freigabestellung gemäß Fig. 2 nach innen zur Dachmitte hin zu der Innenseite des Dachrelingprofils 2 hin beabstandet, liegt aber bereits oben auf der Oberseite des Dachrelingprofils 2 auf (Fig. 2, 3 und 6). In geklemmtem Zustand ist der Klemmbacken 7 relativ zu dem Stützkörper 5 linearbeweglich nach außen zu dem Dachrelingprofil 2 hin verschoben, wobei eine vertikale Stützflanke des Klemmbackens 7 entsprechend an eine Innenschulter des Dachrelingprofils 2 gepresst ist.

Um den Klemmbacken 7 und die Klemmplatte 8 zwischen der Freigabestellung und der Klemmstellung verlagern zu können, ist eine Stelleinheit 19, 20 vorgesehen, die eine mit einem Schraubenkopf versehene Stellschraube 19 umfasst. Die Stellschraube 19 ist in eine Gewindeaufnahme des Spannhebels 11 einschraubt. Die Gewindeaufnahme wird durch eine Gewindemutter 20 gebildet, die innerhalb des Spannhebels 11 begrenzt drehbeweglich um eine Drehachse gelagert ist, die parallel zur Schwenkachse 12 ausgerichtet ist. Dadurch können Schwenkbewegungen der Stellschraube 19, die beim Auf- oder Zuschrauben auftreten, ausgeglichen werden. Der Schraubenkopf der Stellschraube 19 stützt sich außenseitig auf einer entsprechenden Anlagefläche der Klemmplatte 8 ab. Dadurch, dass die Gewindemutter 20 in dem Spannhebel 11 gelagert ist, steht die Stellschraube 19 auch mit dem Spannhebel 11 in Wirkverbindung.

Sobald die Stellschraube 19 aus der Freigabestellung gemäß Fig. 2 in Zuschraubrichtung gedreht wird, wird zwangsläufig die Klemmplatte 8 nach oben verschoben, wobei der schräg ausgerichtete Führungsabschnitt 9 der Klemmplatte 8 auf der gewölbten und nach oben und nach innen geneigten Führungsfläche 10 des Stützkörpers 5 entlanggleitet. Sobald der Untergriff der Klemmplatte 8 die im Querschnitt nasenförmige Außenschulter untergreift und sich demzufolge dort abstützt, bewirkt ein weiteres Zudrehen der Stellschraube 19 in gleicher Drehrichtung eine Linearverschiebung des Klemmbackens 7 längs der Unterseite des Stützkörpers 5 in Richtung zum Dachrelingprofil 2 hin. Sobald die entsprechende Stützflanke des Klemmbackens 7 an der Innenschulter des Dachrelingprofils 2 zur Anlage gelangt ist, bewirkt eine weitere Drehbewegung der Stellschraube 19 in gleicher Drehrichtung ein Verschwenken des Spannhebels 11 im Uhrzeigersinn - auf die Darstellung gemäß den Fig. 2 bis 6 bezogen. Hierdurch wird der Spannhebel 11 um die Schwenkachse 12 nach rechts verkippt, wodurch die Gleitelemente 15 auf den Boden des Hohlprofilabschnitts 14 des Trägerprofils 3 gepresst werden. Die Blattfedern der Gleitelemente 16 bewirken aufgrund ihrer elastischen Nachgiebigkeit einen Toleranzausgleich. Die Stellschraube 19 wird mittels eines Drehmomentschlüssels auf ein vorgegebenes Drehmoment angezogen, das sicherstellt, dass der Stützkörper 5 über den Klemmbacken 7 und den Spannhebel 11 sicher mit dem Trägerprofil 3 verspannt ist. Nach beendeter Drehung der Stellschraube 19 wird die Zugänglichkeit der Stellschraube 19 am Stützkörper 5 durch eine schwenkbare Deckelblende 6 verschlossen, die zusätzlich mit einem Schloss versehen ist, um in geschlossenem Zustand der Deckelblende 6 gemäß Fig. 5 ein Öffnen der Deckelblende 6 zu unterbinden. Dadurch ist auch die eingestellte Montageklemmung durch die Stelleinheit gesichert.

Eine Demontage der Dachträgeranordnung erfolgt in entsprechend umgekehrter Weise durch ein Lösen und Öffnen der Deckelblende 6 und durch ein Aufschrauben der Stellschraube 19, wodurch die Klemmplatte 8 und der Klemmbacken 7 zwangsläufig entgegengesetzte Bewegungen in Richtung ihrer Freigabestellung durchführen. Nach Erreichen der Freigabestellung kann die Dachträgeranordnung in einfacher Weise von den Dachrelingprofilen 2 und damit vom Fahrzeugdach 1 entfernt werden.

Die beiden als Blattfedern gestalteten Stützelemente 16, die den Kopfabschnitt 13 auf gegenüberliegenden Seiten flankieren und sich auf einem Bodenabschnitt 21 des Hohlprofilabschnitts 14 des Trägerprofils 3 abstützen, sind über den Lagerbolzen 18 miteinander verbunden, der eine Bohrung des Kopfabschnittes 13 durchdringt. Der Lagerbolzen 18 ist als Blindniet gestaltet. Entsprechende Laschenabschnitte der Blattfedern 16, die gemeinsam die Blindniete bilden, sind einstückig mit dem Federstahl der jeweiligen Blattfeder. Beide Blattfedern 16 sind in W-förmiger Querschnittsgestaltung ausgeführt (siehe Fig. 6) und weisen zwei nach unten abragende, höckerförmige Stützabschnitte 22 auf, mittels derer sich jede Blattfeder 16 auf dem Bodenabschnitt 21 des Hohlprofilabschnittes 14 seitlich neben dem Längsschlitz im Bodenabschnitt des Trägerprofils abstützt. Im montierten Zustand des Kopfabschnittes 13 in dem Hohlprofilabschnitt 14 des Trägerprofils 3 sind die Blattfedern 16 unter Vorspannung gegen den Bodenabschnitt 21 abgestützt. In diesem montierten Zustand liegt der Stützkörper 5 des Stützfußes 4 von unten her an dem Trägerprofil 3 an und der Kopfabschnitt 13 des Spannhebels 11 ist von einer Stirnseite des Trägerprofils her in den Hohlprofilabschnitt 14 eingeführt. In dieser Stellung ist zudem der Klemmbacken 7, in dem der Spannhebel 11 schwenkbeweglich gelagert ist, an einer Unterseite des Stützkörpers 5 linear verschiebbar geführt. Hierzu sind entsprechende, nicht näher bezeichnete Linearführungen vorgesehen, die eine Linearverschiebbarkeit des Klemmbackens 7 relativ zum Stützkörper 5 parallel zu einer Längserstreckung des Trägerprofils gewährleisten. Dadurch, dass die Blattfedern 16 den Spannhebel 11 unter Vorspannung im Hohlprofilabschnitt 14 gestützt halten, ist auch für den Klemmbacken 7 in Hochrichtung kein Spiel vorhanden. Vielmehr ist eine klar definierte Linearbeweglichkeit in Längsrichtung des Trägerprofils 3 gegeben. Durch die Blattfedern 16 wird der Spannhebel 11 relativ zum Trägerprofil in einer Ausrichtung in Hochrichtung, d. h. in montiertem Zustand in vertikaler Ausrichtung, gehalten. In dieser vorgespannten Stellung sind die beiden in Längsrichtung des Trägerprofils 3 axial versetzten Stützelemente 15, die als Klemmsteine ausgeführt sind, mit ihrer unteren Stützfläche 23 zu dem Bodenabschnitt 21 des Hohlprofilabschnittes 14 in geringem Abstand gehalten. Erst wenn der Spannhebel 11 nach Erreichen der Endlage des Klemmbackens 7 an der Innenschulter des Dachrelingprofils 2 nach rechts verschwenkt wird, gelangt die untere Klemmfläche 23 jedes als Klemmstein ausgeführten Stützelementes 15 auf dem entsprechenden Bodenabschnitt 21 des Trägerprofils 3 zur Anlage, so dass die durch die Blattfedern 16 aufgebrachte Vorspannkraft durch die entsprechende Klemmkraft, die in Hochrichtung nach unten auf den Bodenabschnitt 21 wirkt, überlagert wird. Wie zuvor bereits beschrieben wurde, erfolgt die Linearbewegung des Klemmbackens 7 in Verbindung mit der Bewegung der äußeren Klemmplatte 8 in Hochrichtung durch die Stellschraube 19 der Stelleinheit, die auf den Spannhebel 11 wirkt. Die Blattfedern 16 verhindern, dass der Spannhebel 11 bereits vor Erreichen der klemmenden Anlage des Klemmbackens 7 an der Innenschulter des Dachrelingprofils 2 zu kippen beginnt. Bei einem erneuten Lösen der Stelleinheit aus der Klemmstellung erfolgt in umgekehrter Reihenfolge zunächst ein Abheben der Klemmsteine (der Stützelemente 15) von den Bodenabschnitten 21 des Trägerprofils 3, eine anschließende Ausrichtung des Spannhebels 11 in Hochrichtung durch die nun wieder wirkende Vorspannkraft der Blattfedern 16 und schließlich eine Verlagerung des Klemmbackens 7 in Öffnungsrichtung zur Fahrzeugmitte hin. Gleichzeitig wird die äußere Klemmplatte 8 längs der schiefen Ebene - wie zuvor bereits beschrieben - nach unten abgesenkt, wodurch der Untergriff die Nase der Außenschulter des Dachrelingprofils 2 freigibt.

## Patentansprüche

1. Dachträgeranordnung für ein Kraftfahrzeug mit einem Trägerprofil (3), das in montiertem Zustand in Fahrzeugquerrichtung über ein Fahrzeugdach (1) erstreckt ist, sowie mit zwei Stützfüßen (4), die das Trägerprofil (3) in montiertem Zustand auf jeweils einem fahrzeugfesten Dachrelingprofil (2) sichern, wobei jeder Stützfuß (4) einen Stützkörper (5), auf dem das Trägerprofil (3) abgestützt ist, sowie einen relativ zu dem Stützkörper beweglichen inneren Klemmbacken (7) aufweist, wobei der innere Klemmbacken (7) parallel zu einer Längserstreckung des Trägerprofils (3) linearbeweglich gelagert ist, und dass eine mechanische Stelleinheit (11, 19, 20) vorgesehen ist, die mit dem inneren Klemmbacken (7) in Wirkverbindung ist, um den Klemmbacken (7) zwischen einer Freigabestellung und einer Klemmstellung zu verlagern, **dadurch gekennzeichnet, dass** jeder Stützfuß (4) eine äußere Klemmplatte (8) mit einem Untergriff aufweist, die in Hochrichtung relativ zu dem Stützkörper (5) verlagerbar ist, und dass die mechanische Stelleinheit (11, 19, 20) zusätzlich mit der äußeren Klemmplatte (8) in Wirkverbindung ist, und dass die Klemmplatte (8) in Abstand oberhalb des Untergriffs mit einem Führungsabschnitt (9) versehen ist, der auf einer gekrümmten Führungsfläche (10) des Stützkörpers gleitbeweglich abgestützt ist.

2. Dachträgeranordnung nach Anspruch 1, **dadurch gekennzeichnet, dass** die Stelleinheit (11, 19, 20) einen Spannhebel (11) umfasst, der in dem linearbeweglichen Klemmbacken (7) schwenkbeweglich gelagert ist, und der einen Kopfabschnitt (13) aufweist, der formschlüssig in das Trägerprofil (3) eingreift.

3. Dachträgeranordnung nach Anspruch 2, **dadurch gekennzeichnet, dass** der Kopfabschnitt (13) Stützelemente (15, 16) aufweist, die in dem Trägerprofil (3) längsverlagerbar geführt sind, und die den Kopfabschnitt (13) in Hochrichtung in dem Trägerprofil (3) abstützen.

4. Dachträgeranordnung nach Anspruch 3, **dadurch gekennzeichnet, dass** die Stützelemente (15, 16) an dem Kopfabschnitt (13) um wenigstens eine Gelenkachse gelenkig gelagert sind, die parallel zu der Schwenkachse des Spannhebels (11) ausgerichtet ist.

5. Dachträgeranordnung nach Anspruch 4, **dadurch gekennzeichnet, dass** die Stelleinheit eine von einer Außenseite des Stützfußes (4) her zugängliche Stellschraube (19) aufweist, die mittels ihres Schraubenkopfes an der Klemmplatte (8) abgestützt ist, und die in eine Gewindeaufnahme des Spannhebels (11) schraubbeweglich eingreift.

6. Dachträgeranordnung nach Anspruch 5, **dadurch gekennzeichnet, dass** die Gewindeaufnahme durch eine Gewindemutter (20) gebildet ist, die in dem Spannhebel (11) um eine Drehachse begrenzt drehbeweglich gelagert ist, die parallel zu der Schwenkachse des Spannhebels (11) ausgerichtet ist.

7. Dachträgeranordnung nach einem der vorhergehenden Ansprüche, **dadurch gekennzeichnet, dass** wenigstens ein Stützelement durch ein in Hochrichtung elastisch nachgiebiges Spannelement (16) gebildet ist, das sich in Hochrichtung vorgespannt auf einem Bodenabschnitt (21) des Trägerprofils (3) abstützt.

8. Dachträgeranordnung nach Anspruch 7, **dadurch gekennzeichnet, dass** das Spannelement (16) durch eine Blattfeder gebildet ist, die zwei in Längsrichtung des Trägerprofils (3) zueinander beabstandete Stützabschnitte (22) aufweist, mit denen die Blattfeder auf dem Bodenabschnitt (21) des Trägerprofils (3) abgestützt ist.

9. Dachträgeranordnung nach Anspruch 7 oder 8, **dadurch gekennzeichnet, dass** ein in Längsrichtung des Trägerprofils (3) zu dem wenigstens einen Spannelement (16) beabstandetes, um eine parallele Gelenkachse am Kopfabschnitt (13) schwenkbeweglich angelenktes Stützelement (15) vorgesehen ist, das in unbelastetem Zustand des Spannhebels (11) zu dem Bodenabschnitt (21) des Trägerprofils (3) beabstandet ist.

10. Dachträgeranordnung nach Anspruch 9, **dadurch gekennzeichnet, dass** eine Vorspannkraft, die durch das wenigstens eine Spannelement (16) auf den Bodenabschnitt (21) des Trägerprofils (3) wirkt, derart dimensioniert ist, dass der Kopfabschnitt (13) bei einer Verlagerungsbewegung des Klemmbackens (7) durch das Spannelement (16) derart parallel gehalten wird, dass das Stützelement (15) zu dem Bodenabschnitt (21) beabstandet bleibt, bis der Klemmbacken (7) an dem Dachrelingprofil (2) zur Anlage kommt und der Spannhebel (11) um einen vorgegebenen Winkel verschwenkt ist.

## Claims

1. Roof rack assembly for a motor vehicle, comprising a rack profile (3) extending in the installed condition in the transverse direction of the vehicle across a vehicle roof (1), and comprising two leg supports (4) securing the rack profile (3) in the installed condition on a respective one of vehicle-fixed roof railing profiles (2), wherein each leg support (4) includes a support body (5) with the rack profile (3) supported thereon, and an inner clamping jaw (7) which is movable relative to the support body, wherein the inner clamping jaw (7) is mounted for linear movement in parallel to a longitudinal extension of the rack profile (3), and in that a mechanical actuator unit (11, 19, 20) is provided and in operative connection to the inner clamping jaw (7), in order to displace the clamping jaw (7) between a release position and a clamping position, **characterized in that**
each leg support (4) includes an outer clamping plate (8) with an undercut, which plate is displaceable in the vertical direction relative to the support body (5), and **in that** the mechanical actuator unit (11, 19, 20) is additionally in operative connection to the outer clamping plate (8), and **in that** the clamping plate (8) is provided with a guiding section (9) at a distance above the undercut, which guiding section is supported on a curved guiding surface (10) of the support body for sliding movement.

2. Roof rack assembly according to claim 1, **characterized in that** the actuator unit (11, 19, 20) comprises a tensioning lever (11) which is pivotably mounted in the linearly movable clamping jaw (7), and which includes a head section (13) engaging in the rack profile (3) in a form-fitting manner.

3. Roof rack assembly according to claim 2, **characterized in that** the head section (13) includes support elements (15, 16) which are guided in the rack profile (3) for lengthwise displacement, and which support the head section (13) in the rack profile (3) in the vertical direction.

4. Roof rack assembly according to claim 3, **characterized in that** the support elements (15, 16) are articulated to the head section (13) about at least one hinge axis which is oriented in parallel to the pivot axis of the tensioning lever (11).

5. Roof rack assembly according to claim 4, **characterized in that** the actuator unit includes an adjuster screw (19) accessible from an exterior side of the leg support (4), which screw is supported on the clamping plate (8) by means of its screw head, and which screw engages in a threaded seat of the tensioning lever (11) by screwing.

6. Roof rack assembly according to claim 5, **characterized in that** the threaded seat is a threaded nut (20) which is mounted in the tensioning lever (11) for rotation about a rotational axis in a limited manner, which rotational axis is oriented in parallel to the pivot axis of the tensioning lever (11).

7. Roof rack assembly according to any of the preceding claims, **characterized in that** at least one support element is a tensioning element (16) elastically resilient in the vertical direction, which element is supported on a bottom section (21) of the rack profile (3) pre-tensioned in the vertical direction.

8. Roof rack assembly according to claim 7, **characterized in that** the tensioning element (16) is a leaf spring which includes two support sections (22) mutually spaced in the longitudinal direction of the rack profile (3), with the leaf spring being supported on the bottom section (21) of the rack profile (3) by said support sections.

9. Roof rack assembly according to claim 7 or 8, **characterized in that** a support element (15) spaced from the at least one tensioning element (16) in the longitudinal direction of the rack profile (3), pivotably articulated on the head section (13) about a parallel hinge axis is provided, which support element is spaced from the bottom section (21) of the rack profile (3) in the unloaded condition of the tensioning lever (11).

10. Roof rack assembly according to claim 9, **characterized in that** a pre-tensioning force acting on the bottom section (21) of the rack profile (3) via the at least one tensioning element (16) is dimensioned such that the head section (13) during a displacing move of the clamping jaw (7) is held in parallel by the tensioning element (16) in such a manner that the support element (15) remains spaced from the bottom section (21) until the clamping jaw (7) comes to abutment on the roof railing profile (2) and the tensioning lever (11) is pivoted about a pre-defined angle.

## Revendications

1. Agencement de galerie de toit pour un véhicule automobile avec un profilé porteur (3) s'étendant à travers un toit de véhicule (1) dans la direction transversale du véhicule à l'état monté, ainsi qu'avec deux pieds d'appui (4) sécurisant le profilé porteur (3) à l'état monté sur un profilé de rail de toit (2) respectif solidaire du véhicule, dans lequel chaque pied d'appui (4) comprend un corps de support (5), sur lequel le profilé porteur (3) prend appui, ainsi qu'une mâchoire de serrage (7) intérieure mobile par rapport au corps de support, dans lequel la mâchoire de serrage (7) intérieure est montée pour un mouvement linéaire parallèlement par rapport à une étendue longitudinale du profilé porteur (3), et qu'une unité d'actionnement mécanique (11, 19, 20) est disposée et en liaison fonctionnelle avec la mâchoire de serrage (7) intérieure pour déplacer la mâchoire de serrage (7) entre une position de déblocage et une position de serrage,
**caractérisé en ce que**
chaque pied d'appui (4) comprend une plaque de serrage extérieure (8) avec une contre-dépouille, déplaçable par rapport au corps de support (5) en direction verticale, et **en ce que** l'unité d'actionnement mécanique (11, 19, 20) est de plus en liaison fonctionnelle avec la plaque de serrage extérieure (8), et **en ce que** la plaque de serrage (8) est dotée d'une section de guidage (9) espacée au-dessus de la contre-dépouille, la section de guidage prenant appui de manière coulissante sur une surface de guidage (10) courbe du corps de support.

2. Agencement de galerie de toit selon la revendication 1, **caractérisé en ce que** l'unité d'actionnement (11, 19, 20) comporte un levier de tension (11), monté de manière pivotante dans la mâchoire de serrage (7) linéairement mobile, et présentant une section de tête (13) engageant dans le profilé porteur (3) par complémentarité de formes.

3. Agencement de galerie de toit selon la revendication 2, **caractérisé en ce que** la section de tête (13) présente des éléments d'appui (15, 16), guidés dans le profilé porteur (3) pour déplacement longitudinal, et supportant la section de tête (13) dans le profilé porteur (3) en direction verticale.

4. Agencement de galerie de toit selon la revendication 3, **caractérisé en ce que** les éléments d'appui (15, 16) sont articulés sur la section de tête (13) autour d'au moins un axe d'articulation orienté parallèlement par rapport à l'axe de pivotement du levier de tension (11).

5. Agencement de galerie de toit selon la revendication 4, **caractérisé en ce que** l'unité d'actionnement présente une vis d'actionnement (19) accessible d'un côté 'extérieur du pied d'appui (4), ladite vis prenant appui sur la plaque de serrage (8) par sa tête de vis, et ladite vis engageant par vissage dans un orifice fileté du levier de tension (11).

6. Agencement de galerie de toit selon la revendication 5, **caractérisé en ce que** l'orifice fileté est formé par un écrou fileté (20), monté dans le levier de tension (11) pour mouvement rotatif autour d'un axe de rotation de manière limitée, ledit axe orienté parallèlement par rapport à l'axe de pivotement du levier de tension (11).

7. Agencement de galerie de toit selon l'une quelconque des revendications précédentes, **caractérisé en ce qu'**au moins un élément d'appui est formé par un élément de tension (16) élastiquement résilient en direction verticale, prenant appui sur une partie inférieure (21) du profilé porteur (3) précontraint dans la direction verticale.

8. Agencement de galerie de toit selon la revendication 7, **caractérisé en ce que** l'élément de tension (16) est formé par un ressort à lame comprenant deux sections d'appui (22) espacées l'une de l'autre en direction longitudinale du profilé porteur (3) par le biais desquels le ressort à lame prend appui sur la partie inférieure (21) du profilé porteur (3).

9. Agencement de galerie de toit selon la revendication 7 ou 8, **caractérisé en ce qu'**un élément d'appui (15) espacé de l'au moins un élément de tension (16) en direction longitudinale du profilé porteur (3), articulé autour d'un axe d'articulation parallèle sur la section de tête (13) est disposé et espacé de la partie inférieure (21) du profilé porteur (3) en condition détendue du levier de tension (11).

10. Agencement de galerie de toit selon la revendication 9, **caractérisé en ce qu'**une force de prétension agissant sur la partie inférieure (21) du profilé porteur (3) par le biais de l'au moins un élément de tension (16) est dimensionnée de telle façon que, pendant un mouvement de déplacement de la mâchoire de serrage (7), la section de tête (13) est maintenue en parallèle par l'élément de tension (16) de telle manière que l'élément d'appui (15) reste espacé de la partie inférieure (21) jusqu'à ce que la mâchoire de serrage (7) vient en butée sur le profilé de rail de toit (2) et le levier de tension (11) est pivoté selon un angle prédéfini.
